# EUROPEAN PATENT APPLICATION

(11) **EP 3 984 920 A1**
(43) Date of publication of application: **20.04.2022**
(21) Application number: 20864064.9
(22) Date of filing: 17.07.2020
(51) Int. Cl.: B65G 1/137

(54) **AUTOMATIC CARRYING SYSTEM**

(30) Priority: 10.09.2019 CN 201910855116
(71) Applicant: Lingdong Technology (Beijing) Co. Ltd, Beijing 100096 (CN)
(72) Inventor: HAN, Liang, Beijing 100096 (CN); XU, Guodong, Beijing 100096 (CN)
(74) Representative: Vossius & Partner Patentanwälte Rechtsanwälte mbB
(86) International application number: PCT/CN2020/102781
(87) International publication number: WO 2021/047289

(57) **Abstract**

Disclosed is an automated carrying system. The automated carrying system comprises a control center (40) and self-guided transport equipment (10). The automated carrying system is used for providing command information, which includes a target area, target goods, and a delivery destination. The self-guided transport equipment is electrically connected to a control center. The automated carrying system is configured to perform the following steps: controlling the self-guided transport equipment to enter the target area according to the command information; controlling the self-guided transport equipment to capture images in the target area; determining whether the image contains goods; if the image contains goods, determining whether the goods are the target goods; and if the goods are the target goods, controlling the self-guided transport equipment to pick up and carry the goods to the delivery destination.

## Description

### TECHNICAL FIELD

This disclosure relates to a carrying system, in particular to an automated carrying system.

### BACKGROUND ART

In order to save labor costs and improve management efficiency, nowadays warehouse systems have been developing towards automation, which has led to the rise of automated carrying systems. Take self-guided forklifts as an example. A control center of the warehouse system can specify a self-guided forklift as well as an initial position and a target position of the goods to be carried (hereinafter referred to as "target goods"), so that the specified self-guided forklift moves automatically to the initial position without manual operation, and carry the target goods that are placed in the initial position to the target position to complete the carrying task.

Due to the configuration of the known automated carrying systems, however, the aforementioned initial position and target position can only be specified with precise positions. For example, the user may specify a fixed point on a warehouse map of the control center via a user interface, or manually enter the coordinates of the fixed point. Nevertheless, if the warehouse worker accidentally puts the target goods askew or accidentally hits against the target goods when placing the goods in place, leaving the target goods out of the right position, it will be impossible for the self-guided forklift to locate the target goods to complete the carrying task. If the target position can only be a fixed point, problems easily occur, such as failure to unload goods due to other goods that have been placed in the target position, or a number of self-guided forklifts have to wait in line to unload goods. In addition, since the initial position and the target position can only be fixed points, when the target goods are placed in different positions, the user has to manually specify the self-guided forklift, the initial position and the target position via the user interface repeatedly in order to complete the carrying of all the target goods, which is quite inconvenient for use.

### SUMMARY OF THE INVENTION

According to an embodiment of the disclosure, an automated carrying system is provided, which comprises a control center and self-guided transport equipment. The control center is used for providing command information, which includes a target area, target goods and a delivery destination. The self-guided transport equipment is electrically connected to the control center. The automated carrying system is configured to perform the following steps: controlling the self-guided transport equipment to enter the target area according to the command information; controlling the self-guided transport equipment to capture images in the target area; determining whether the image contains goods; if the image contains goods, determining whether the goods are the target goods; and if the goods are the target goods, controlling the self-guided transport equipment to pick up and carry the goods to the delivery destination.

Compared with the prior art, the target area of the present disclosure is an area instead of a fixed point, which can avoid the failure of carrying tasks due to deviation of the target goods from the right position, and which is advantageous for the user to apply a single command to all the target goods within the target area, without the need to give commands one by one to the target goods placed in different positions within the target area. The delivery destination of this disclosure may also be an area instead of a fixed point, thereby avoiding situations where goods cannot be unloaded if the fixed point has been occupied by other goods, or a number of self-guided transport equipments have to wait in line for unloading. Hence, the automated carrying system of the disclosure is advantageous for improving the success rate of carrying tasks, the carrying efficiency, and also the convenience of use for users.

### BRIEF DESCRIPTION OF DRAWINGS

FIG. 1 is a functional block diagram of an automated carrying system according to an embodiment of the disclosure.
FIG. 2 is a perspective view of a self-guided transport equipment according to an embodiment of the disclosure.
FIG. 3 is a perspective view of a self-guided transport equipment according to another embodiment of the disclosure.
FIG. 4 is a flowchart of steps configured for picking up goods by an automated carrying system according to an embodiment of the disclosure.
FIG. 5 is a schematic diagram of a user interface according to an embodiment of the disclosure.
FIG. 6 is a schematic diagram of a barcode of goods according to an embodiment of the disclosure.
FIG. 7 is a schematic diagram of a label of goods according to an embodiment of the disclosure.
FIG. 8 is a schematic diagram of a user interface according to another embodiment of the disclosure.
FIG. 9 is a schematic diagram of a user interface according to a further embodiment of the disclosure.
FIG. 10 is a schematic diagram of a user interface according to a further embodiment of the disclosure.
FIG. 11 is a flowchart of part of the steps for picking up goods by an automated carrying system according to another embodiment of the disclosure.
FIG. 12 is a flowchart of the other part of the steps of the embodiment in FIG. 11.
FIG. 13 is a schematic diagram of a user interface according to a further embodiment of the disclosure.
FIG. 14 is a schematic diagram of a goods stack according to an embodiment of the disclosure.
FIG. 15 is a schematic diagram of an image of the goods stack in FIG. 14.
FIG. 16 is a flowchart of steps for picking up goods by an automated carrying system according to a further embodiment of the disclosure.
FIG. 17 is a schematic diagram of a user interface according to a further embodiment of the disclosure.
FIG. 18 is a schematic diagram of a user interface according to a further embodiment of the disclosure.
FIG. 19 is a schematic diagram of a user interface according to a further embodiment of the disclosure.

The reference signs are listed as follows:
10, 10a, 10b, 10c, 20, 30: self-guided transport equipment
11: processing unit
12, 32, 215: imaging module
13, 33, 220: first distance sensor
14: drive module
15, 34, 120: goods holder module
16: second storage module
17: power supply module
18: second communication module
31, 281: carrier
34a: mechanical arm
34b: goods holder portion
35, 131, 132, 133: wheel
40: control center
41: management unit
42: user interface
43: first communication module
44: first storage module
100: forklift device
120a: prong 280: bearing structure
282: mounting part
400, 405, 410, 415, 420, 430, 440, 450: step
441, 442, 443, 444, 445, 446, 447, 448: step
600a, 600b, 600c, 600d, 600e, 600f, 600g, 600h: user interface
610a, 610b, 610c, 610d, 610e, 610f, 610g, 610h: map
611a, 611b, 611c, 611d, 611e, 611f, 611g, 611h: shelf pattern
612a, 612b, 612c, 612d, 612e, 612f, 612g, 612h: goods pattern
620a, 620b, 620c, 620d, 620e, 620f, 620g, 620h: input interface
630a, 630b, 630c, 630e, 630f, 630g, 630h: target area
631d, 632d, 633d: area
640: hand
700: goods stack
710: barcode
711, 712, 713: characteristic information
720: label
721, 722, 723: pattern
730: goods
750: image
751: block
752: gap image
770: pallet
771: hole
O: point
R: radius
H: height
L: length
W: width
L1: first path
L2: second path
L3: checking path
L4, L5, L6: shortest distance

### DETAILED DESCRIPTION OF EMBODIMENTS

The foregoing and further technical contents, features, and effects of the disclosure will be clearly presented in the following detailed description of the preferred embodiments in combination with exemplary drawings. It should be noted that the directional terms mentioned in the following embodiments, for example, up, down, left, right, front, back, etc., only refer to the directions of the exemplary drawings. Hence, the directional terms used herein are for the purpose of explaining, rather than limiting the disclosure. In addition, the same or similar elements will be represented by the same or similar reference signs throughout the following embodiments.

In this disclosure, electrical connection means that electrical energy or data, such as electrical signals, magnetic signals, and command signals, can be transmitted directly, indirectly, by wire or wirelessly between elements.

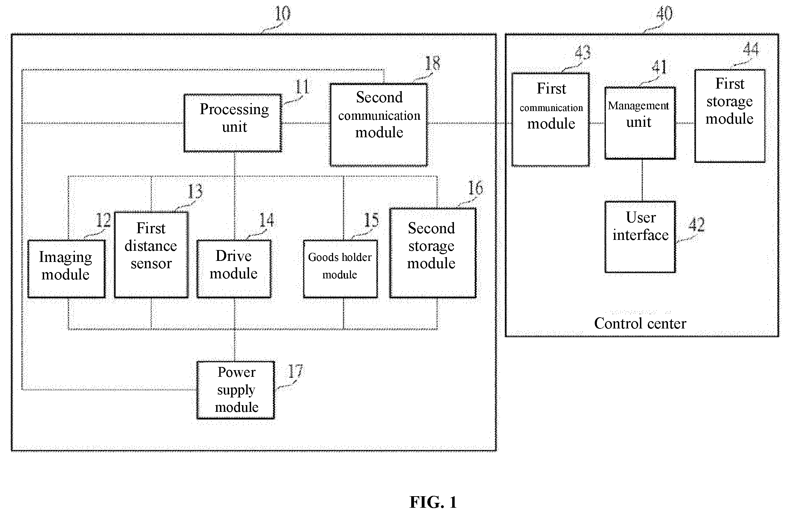

Please refer to FIG. 1. An automated carrying system comprises a control center 40 and self-guided transport equipment 10. The control center 40 is used for providing command information, which includes a target area, target goods, and a delivery destination. To be specific, the control center 40 may be a remote control center, by which it means that the control center 40 is not arranged on the self-guided transport equipment 10. For example, the control center 40 may be arranged in an office, the self-guided transport equipment 10 may be placed in a warehouse, and the office and the warehouse are located in different spaces. The control center 40 may comprise a management unit 41, a user interface 42, and may preferably comprise a first communication module 43 and a first storage module 44, wherein the management unit 41 is electrically connected to the user interface 42, the first communication module 43 and the first storage module 44.

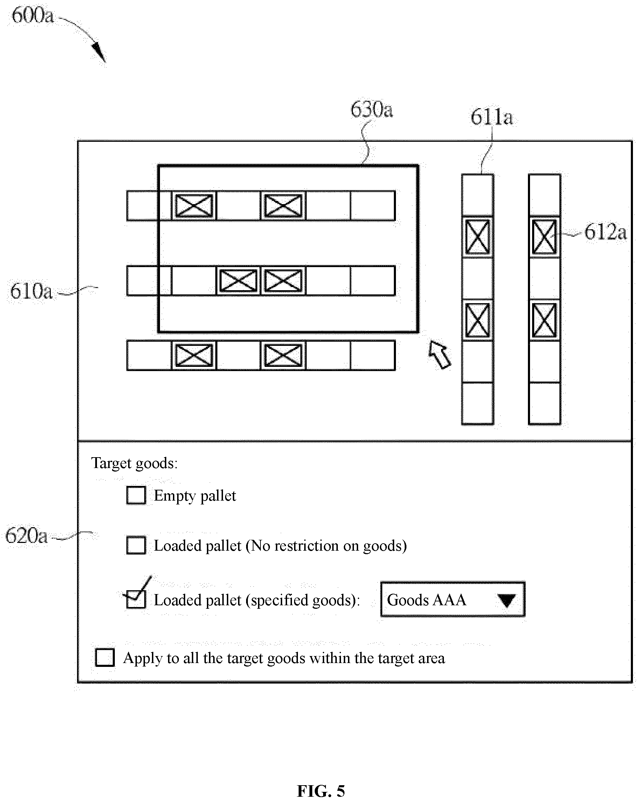

The control center 40 may be a server or a computer, the management unit 41 may be a warehouse management system (WMS), and the user interface 42 is used for the user to input information to be transmitted to the management unit 41, whereby the user can control the self-guided transport equipment 10 through the control center 40. Preferably, the control center 40 may include a displayer (not shown) for displaying the user interface 42, the displayer may include a touch screen, and the control center 40 may further include input devices (not shown), such as a mouse and a keyboard. In this way, the user can input information on the user interface 42 directly via the touch screen and/or the input devices. The first communication module 43 may be, but is not limited to, a Wi-Fi wireless transmission module. The first storage module 44 may be used for storing data, such as map information of a workplace (e.g., a warehouse) of the self-guided transport equipment 10, goods storage information, goods information, etc. The first storage module 44 may be, but is not limited to, a read-only memory, a random access memory, or a combination thereof. For the user interface 42, reference can be made to the descriptions of FIG. 5, FIG. 8 to FIG. 10, FIG. 13, and FIG. 17 to FIG. 19.

The self-guided transport equipment 10 is electrically connected to the control center 40 to receive the command information provided by the control center 40. To be specific, the self-guided transport equipment 10 may comprise a processing unit 11, an imaging module 12, a drive module 14 and a goods holder module 15, wherein the processing unit 11 is electrically connected to the imaging module 12, the drive module 14 and the goods holder module 15. The processing unit 11 has computing capabilities, and the processing unit 11 may be, but is not limited to, a central processing unit (CPU) or a graphics processing unit (GPU). The imaging module 12 is used for capturing images, for example, for capturing images of the surrounding environment of the self-guided transport equipment 10 so as to obtain surrounding information of the workplace where the self-guided transport equipment 10 is located. The imaging module 12 may be a two-dimensional imaging module or a three-dimensional imaging module. The two-dimensional imaging module may be a camera, and the three-dimensional imaging module may be, but is not limited to, a combination of two cameras or a combination of a camera and a projector. In the case where the imaging module 12 is a two-dimensional imaging module, the self-guided transport equipment 10 may preferably include a first distance sensor 13, which is electrically connected to the processing unit 11 and is used for sensing a distance between the self-guided transport equipment 10 and a surrounding object. The first distance sensor 13 may be, but is not limited to, LiDAR. In the case where the imaging module 12 is a three-dimensional imaging module, the distance between the self-guided transport equipment 10 and the surrounding object may be directly calculated from the image obtained by the three-dimensional imaging module.

The drive module 14 is used for driving the self-guided transport equipment 10 to move. The goods holder module 15 is used for picking up goods, and based on the shape and characteristics of the goods, a goods holder module 15 suitable for picking up the goods may be selected. The self-guided transport equipment 10 may preferably include a second communication module 18, through which the processing unit 11 is electrically connected to the control center 40, and the second communication module 18 may be, but is not limited to, a Wi-Fi wireless transmission module. The self-guided transport equipment 10 may preferably include a second storage module 16, which is electrically connected to the processing unit 11, and the second storage module 16 may be used for storing data, such as the map information of the workplace (e.g., a warehouse) of the self-guided transport equipment 10, goods storage information, goods information, positioning information of the self-guided transport equipment 10, navigation information of the self-guided transport equipment 10, etc. The second storage module 16 may be, but is not limited to, a read-only memory, a random access memory, or a combination thereof. The self-guided transport equipment 10 may include a power supply module 17, which is used for providing the power required by the self-guided transport equipment 10. For example, the power supply module 17 may be electrically connected to the processing unit 11, the imaging module 12, the first distance sensor 13, the drive module 14, the goods holder module 15, the second storage module 16, and the second communication module 18 to supply the power required by the aforementioned elements. The power supply module 17 may be a plug or a battery. The self-guided transport equipment 10 may preferably include a second distance sensor (not shown), which may be electrically connected to the processing unit 11, thereby further providing obstacle-avoidance function for the self-guided transport equipment 10. The second distance sensor may be, but is not limited to, a photoelectric sensor.

The control center 40 will be described below as a remote control center. However, the disclosure is not limited thereto. The control center 40 may also be arranged on the self-guided transport equipment 10 and be electrically connected to the processing unit 11, in which case the first communication module 43 and the second communication module 18 in FIG. 1 can be omitted, and it is possible to keep only one of the first storage module 44 and the second storage module 16.

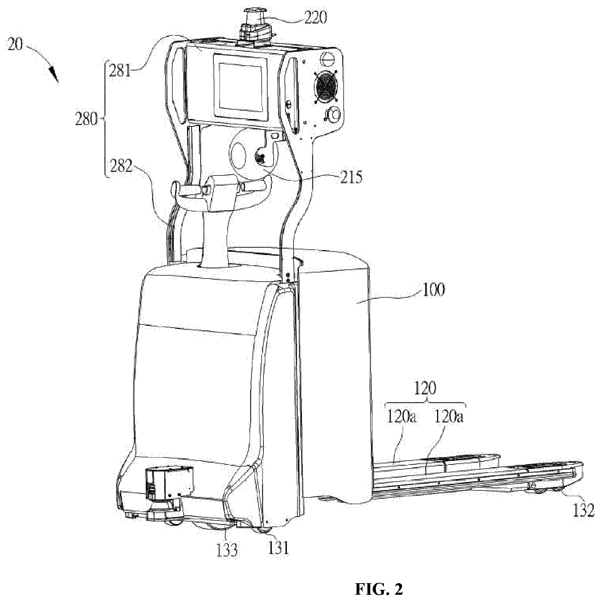

With reference to FIG. 2, in this embodiment, a self-guided transport equipment 20 is a self-guided forklift, and the self-guided transport equipment 20 comprises a forklift device 100, a processing unit (not shown), an imaging module 215, a first distance sensor 220, and a bearing structure 280, wherein the bearing structure 280 comprises a carrier 281 and a mounting part 282, and the mounting part 282 is connected to the carrier 281 and is detachably mounted on the forklift device 100. The processing unit is arranged inside the carrier 281, the imaging module 215 is arranged below the carrier 281, and the first distance sensor 220 is arranged above the carrier 281. The forklift device 100 comprises a drive module (no reference sign shown), a goods holder module 120, and a power supply module (not shown), wherein the drive module may comprise a motor (not shown) and a plurality of wheels 131, 132, 133, and the motor is arranged in the forklift device 100 and is electrically connected to one or more of the wheels 131, 132, 133 to drive the wheels. The goods holder module 120 consists of two prongs 120a. The power supply module is arranged in the forklift device 100. The forklift device 100 may be a commercially available product, so further details about the forklift device 100 will not be elaborated here. For details about the elements of the self-guided transport equipment 20, a reference can be made to the elements with the same names of the aforementioned self-guided transport equipment 10.

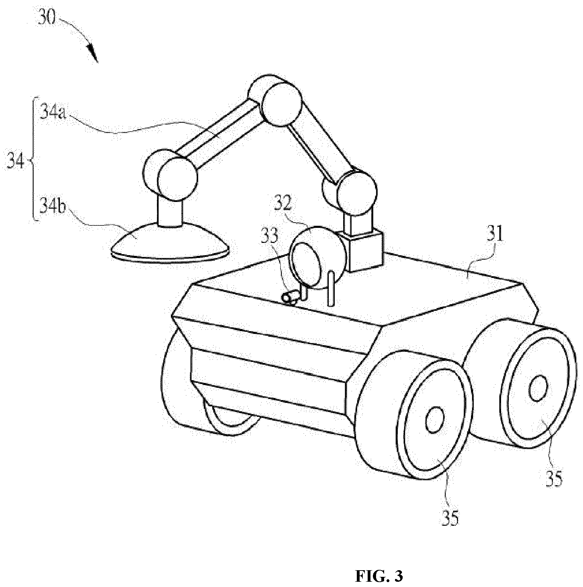

Referring to FIG. 3, in this embodiment, a self-guided transport equipment 30 is a self-guided manipulator, and the self-guided transport equipment 30 comprises a carrier 31, a processing unit (not shown), an imaging module 32, a first distance sensor 33, a drive module (no reference sign shown), a goods holder module 34, and a power supply module (not shown). The processing unit is arranged in the carrier 31. The imaging module 32 and the first distance sensor 33 are arranged above the carrier 31. The drive module may comprise a motor (not shown) and a plurality of wheels 35, wherein the motor is arranged in the carrier 31 and is electrically connected to one or more of the wheels 35 to drive the wheels 35. The goods holder module 34 comprises a mechanical arm 34a and a goods holder portion 34b, wherein the mechanical arm 34a may be a six-axis mechanical arm, and the goods holder portion 34b may be a suction cup which picks up goods by suction. However, the disclosure is not limited thereto. The types of the mechanical arm 34a and the goods holder portion 34b can be selected according to actual needs, for example, the goods holder portion 34b may be a gripper which picks up goods by gripping. The power supply module is arranged in the carrier 31. Regarding details on the elements of the self-guided transport equipment 30, a reference can be made to the elements with the same names of the aforementioned self-guided transport equipment 10.

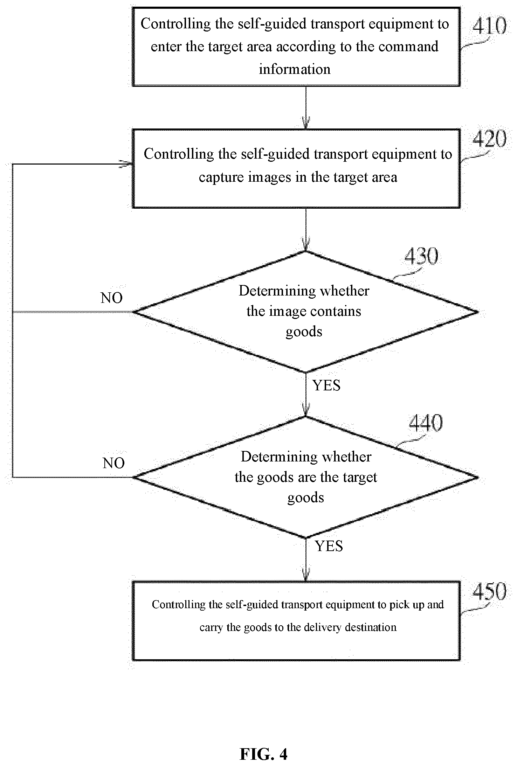

Referring to FIG. 4, the automated carrying system is configured to perform the steps as follows. Step 410, controlling the self-guided transport equipment 10 to enter the target area according to command information. Step 420, controlling the self-guided transport equipment 10 to capture images in the target area. Step 430, determining whether the image contains goods. If the image does not contain goods, return to Step 420 to continue searching for target goods in the target area; and if the image contains goods, proceed to Step 440, determining whether the goods are the target goods. If the goods are not target goods, return to Step 420 to continue searching for target goods in the target area; and if the goods are the target goods, proceed to Step 450, controlling the self-guided transport equipment 10 to pick up and then carry the goods to the delivery destination. Now Step 410 to Step 450 will be described in detail in conjunction with FIG. 5.

FIG. 5 is a schematic diagram of a user interface 600a according to an embodiment of the disclosure, and the user interface 600a may be an example of the user interface 42 of the control center 40. The user interface 600a includes a map 610a and an input interface 620a. The map 610a includes a shelf pattern 611a and a goods pattern 612a, and the map 610a may be a map of the workplace of the self-guided transport equipment 10. Here, the workplace is exampled as a warehouse. A position of the shelf pattern 611a on the map 610a corresponds to a position of a shelf in the warehouse, and a position of the goods pattern 612a on the map 610a corresponds in principle to a position of goods in the warehouse. However, the goods may not be in the expected position as a result of a mistaken placing by the warehouse worker or a collision, which may cause inconsistency between the position of the goods pattern 612a on the map 610a and an actual position of the goods in the warehouse. In addition, in this embodiment, the goods in the warehouse are supposed to be placed on pallets, so options for target goods shown on the input interface 620a include "Empty pallet", "Loaded pallet (no restriction on goods)", and "Loaded pallet (specified goods)". If the option "Loaded pallet (specified goods)" is selected, the type of the goods may be selected further through a drop-down menu. Here the user selects "Loaded pallet (specified goods)" and selects the goods as goods AAA, wherein "AAA" may be a serial number or product name of the goods.

In FIG. 5, the user selects a target area 630a on the map 610a. Here, the user selects the target area 630a on the map 610a using a mouse. Upon selection of the target area 630a by the user, the management unit 41 will record the coordinates of four vertices of the target area 630a and a thus formed area, and the user may further select a delivery destination (not shown) on the map 610a, wherein the delivery destination may be an area or a fixed point. If the delivery destination is an area, the way of selecting the delivery destination may be the same as that of the target area 630a. If the delivery destination is a fixed point, the user may use the mouse to directly click on a desired fixed point on the map 610a as the delivery destination, and the management unit 41 will record the coordinates of four vertices of the delivery destination and a thus formed area, or the coordinates of the fixed point.

Next, the management unit 41 transmits the command information including information about the target area 630a, the target goods and the delivery destination to the self-guided transport equipment 10. After receiving the command information, the processing unit 11 controls the drive module 14 to drive the self-guided transport equipment 10 to enter the target area 630a according to the command information (Step 410). The processing unit 11 controls the self-guided transport equipment 10 to move in the target area 630a while capturing images by using the imaging module 12 (Step 420), and continuously determines in real time whether the images contain goods (Step 430). If the image contains goods, the processing unit 11 may calculate a distance between the goods and the self-guided transport equipment 10 from the image alone or from the image in conjunction with the data collected by the first distance sensor 13, and control the self-guided transport equipment 10 to move to the front of the goods and then determine whether the goods are the target goods (Step 440). If the goods are the target goods, the processing unit 11 controls the goods holder module 15 of the self-guided transport equipment 10 to pick up the goods, and then controls the drive module 14 to drive the self-guided transport equipment 10 to move to the delivery destination, and also controls the goods holder module 15 to place the goods at the delivery destination.

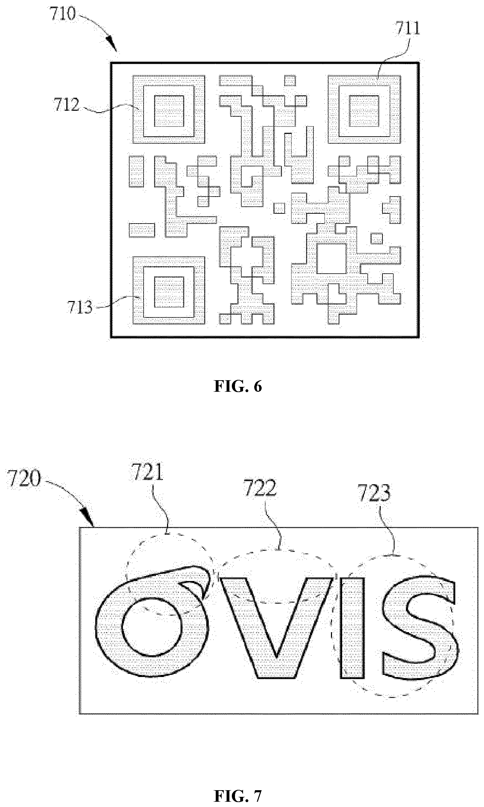

Determination of whether the image contains goods may be performed through image comparison. Take this embodiment as an example. As the target goods are "loaded pallet (specified goods)", the command information may further include pallet image information, or the processing unit 11 may retrieve pallet image information from the first storage module 44 or the second storage module 16 according to the command information and then compare the image captured by the imaging module 12 with the pallet image information. If the image contains contents that match the pallet image information, it is determined that the image contains goods. In other embodiments, if the goods are not restricted to be placed on pallets, the command information may further include goods image information, or the processing unit 11 may retrieve goods image information from the first storage module 44 or the second storage module 16 according to the command information and then compare the image captured by the imaging module 12 with the goods image information. For example, in the case where the goods are all placed in cartons, the goods image information may be carton image information, or the goods image information may be the image information of all the goods in the warehouse or characteristic information of barcodes of the goods. With reference to FIG. 6, in this embodiment, a barcode 710 of the goods is a two-dimensional barcode which includes characteristic information 711, 712, 713 arranged in corners. If the image contains patterns of the characteristic information 711, 712, 713 that satisfy a configuration relation thereof, it can be determined that the image contains goods.

Image comparison may also be used for determining whether the goods are the target goods. For example, the command information may include barcode information of the goods AAA, and the pallets, shelves or cartons for packaging goods in the warehouse are provided with the barcode of the goods loaded therein, so the processing unit 11 may compare the image of the barcode captured by the imaging module 12 with the barcode information of the goods AAA, or the processing unit 11 may retrieve the characteristic information about the goods AAA from the first storage module 44 or the second storage module 16 according to the barcode information, and then compare the image captured by the imaging module 12 with the characteristic information of the goods AAA. FIG. 7 is referred to, which is a schematic diagram of a label 720 of goods AAA according to an embodiment of the disclosure. The label 720 is pasted on an outer side of a carton containing the goods AAA, and the characteristic information may be patterns of the label 720, such as patterns 721, 722, 723. When the image captured by the imaging module 12 contains patterns 721, 722, and 723, it can be determined that the goods are goods AAA.

In other embodiments, when it is determined that the image contains goods (Step 430), it may be further determined whether the goods are in the target area 630a. If the goods are in the target area 630a, proceed to Step 440; and if the goods are not in the target area 630a, return to Step 420. In this way, the accuracy of the automated carrying system for performing carrying tasks can be improved.

In other embodiments, after Step 450 is completed, the processing unit 11 may transmit processing result information to the control center 40, wherein the processing result information may include the type and the quantity of the goods that have been picked up, and also precise positions of the goods before and after being picked up, whereby the data stored in the control center 40 can be updated.

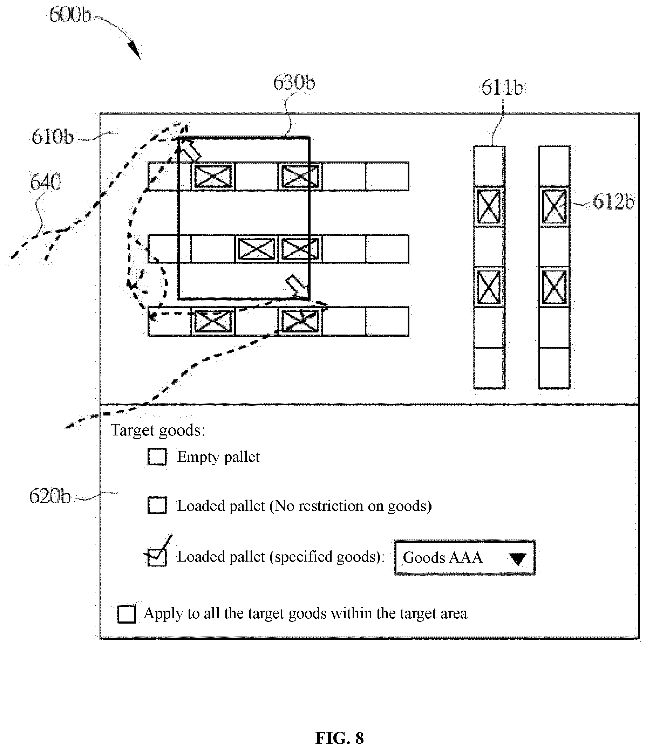

In FIG. 8, a user interface 600b includes a map 610b and an input interface 620b. The map 610b includes a shelf pattern 611b and a goods pattern 612b. The user interface 600b is displayed via a touch screen, and the user selects a target area 630b on the map 610b directly with his hand 640.

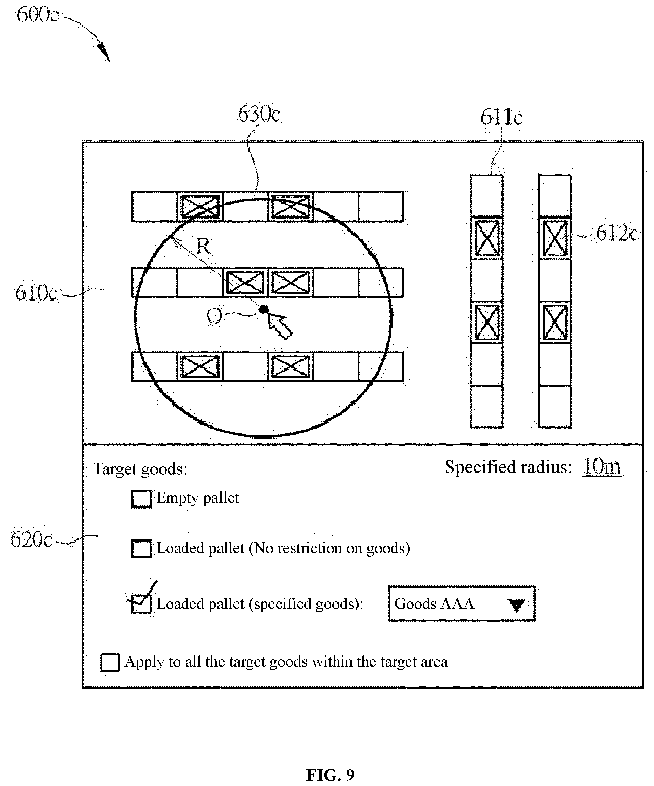

In FIG. 9, a user interface 600c includes a map 610c and an input interface 620c. The map 610c includes a shelf pattern 611c and a goods pattern 612c. The user may directly click on a point O on the map 610c by hand (not shown) or a mouse (not shown), and then draw a desired radius R, or the user may also input a size of the radius R in a radius-specifying field of the input interface 620c. Here, for example, radius R=10m, and a circular target area 630c with the radius R of 10m is obtained.

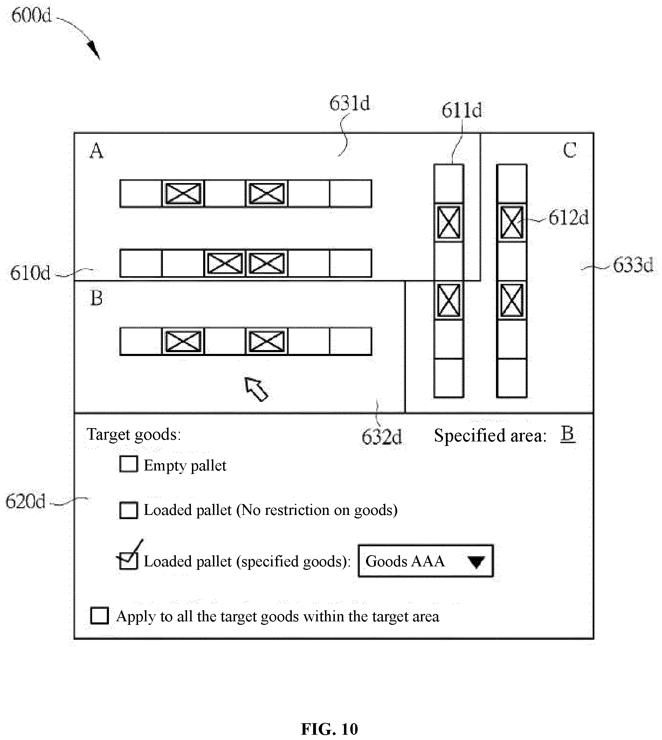

In FIG. 10, a user interface 600d includes a map 610d and an input interface 620d. The map 610d includes a shelf pattern 611d and a goods pattern 612d. The map 610d is pre-divided into an area 631d, an area 632d, and an area 633d, and the user may directly click on one of said areas on the map 610d by hand (not shown) or a mouse (not shown) as the target area, or input an area name (in this case, "B" for area 632d, for example) in an area-specifying field of the input interface 620d. In addition, the size and boundary of area 631d, area 632d, and area 633d are adjustable. Other details in FIG. 8 to FIG. 10 may be the same as FIG. 5 and thus are not elaborated here.

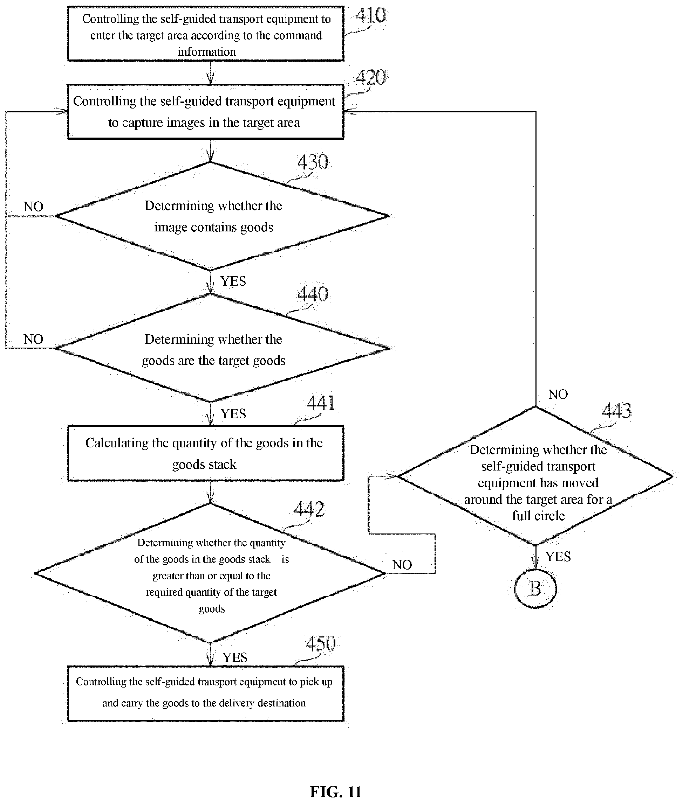

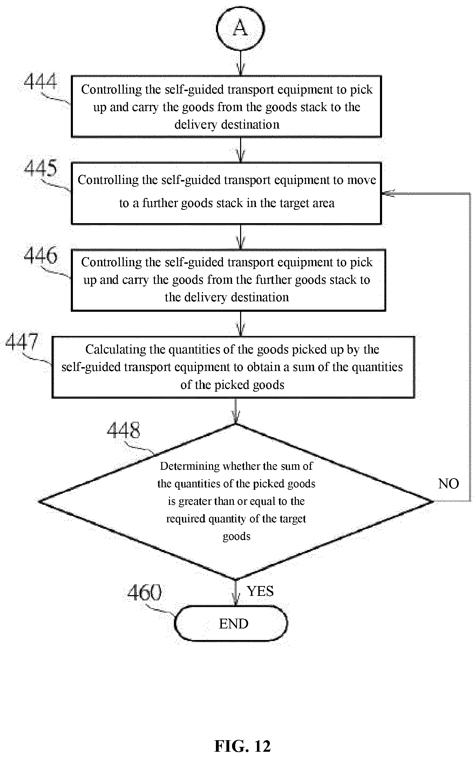

Referring to FIG. 11 and FIG. 12, FIG. 11 is a flow chart A, and FIG. 12 is a flow chart B. FIG. 11 and FIG. 12 are applicable to that the command information further includes a required quantity of target goods and the image contains a goods stack formed from a plurality of goods stacked together. For Step 410 to Step 440, a reference can be made to the preceding texts.

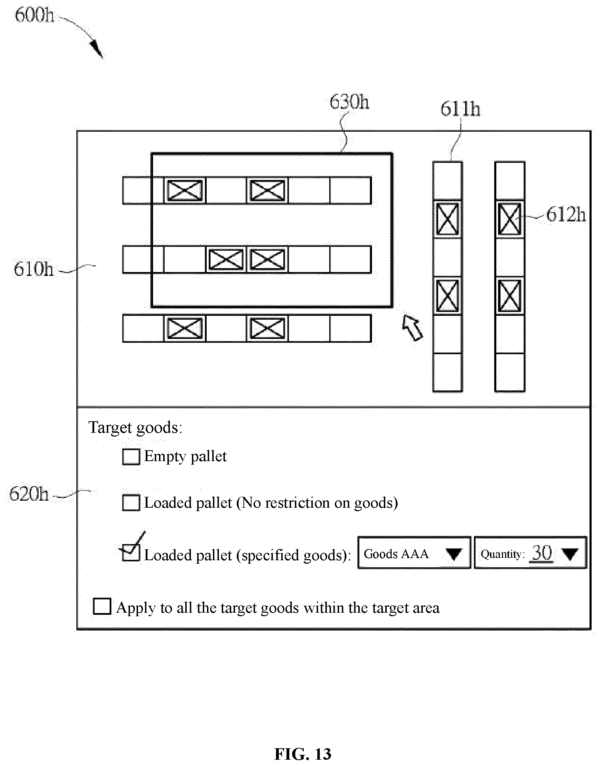

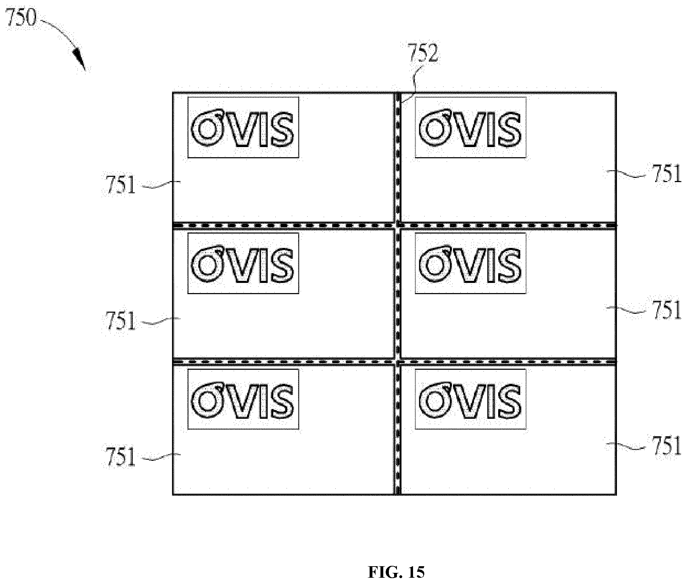

If it is determined that the goods are the target goods, proceed to Step 441, calculating a quantity of the goods in the goods stack. Step 442 is to determine whether the quantity of the goods in the goods stack is greater than or equal to the required quantity of the target goods. If it is determined as "YES", proceed to Step 450, controlling the self-guided transport equipment 10 to pick up and carry the goods from the goods stack to the delivery destination and, by this time, the automated carrying system completes the carrying task; and if it is determined as "NO", proceed to Step 443, determining whether the self-guided transport equipment 10 has already moved around the target area for a full circle. If it is determined as "NO", controlling the self-guided transport equipment 10 not to pick up the goods from the goods stack, and return to Step 420 in order to preferentially search for a further goods stack of the target goods in sufficient quantity; and if it is determined as "YES", it means that the quantity of all the goods stacks of the target goods within the target area is less than the required quantity, in which case the required target goods have to be obtained from different goods stacks of the target goods. So proceed to Step 444, controlling the self-guided transport equipment 10 to pick up and carry the goods from the goods stacks to the delivery destination. And then proceed to Step 445, controlling the self-guided transport equipment 10 to move to a further goods stack in the target area, wherein the further goods stack is formed by a plurality of target goods stacked together (the way of searching for the further goods stack may be carried out through Step 420 to Step 440). Proceed to Step 446, controlling the self-guided transport equipment 10 to pick up and carry the goods from the further goods stack to the delivery destination. Proceed to Step 447, calculating the quantities of the goods that have been picked up by the self-guided transport equipment to obtain a sum of the quantities of the picked goods, that is, adding up the quantities of the goods picked up by the self-guided transport equipment 10 after Step 444. Proceed to Step 448, determining whether the sum of the quantities of the picked goods is greater than or equal to the required quantity of the target goods. If it is determined as "NO", which means that the required quantity has not yet been reached, return to Step 445; and if it is determined as "YES", which means the automated carrying system has completed the carrying task. Proceed to Step 460, controlling the self-guided transport equipment 10 to execute an end command. Step 441 to Step 448 will be described in detail below in conjunction with FIG. 13 and FIG. 15.

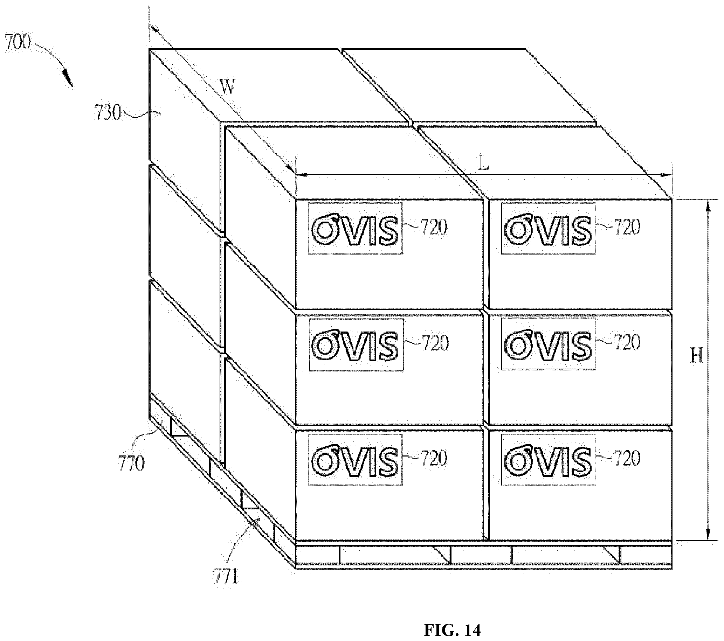

In FIG. 13, a user interface 600h includes a map 610h and an input interface 620h. The map 610h includes a shelf pattern 611h and a goods pattern 612h. The user selects a target area 630h on the map 610h. Compared with FIG. 5, the user may further select through a drop-down menu or input a quantity (i.e., the required quantity), and here the quantity is 30, for example. Now referring to FIG. 14, a goods stack 700is formed by goods 730 stacked together and is placed on a pallet 770, which comprises holes 771. When the self-guided transport equipment 10 finds the goods stack 700 in the target area and determines that the goods 730 are target goods, i.e., goods AAA (Step 440), the processing unit 11 calculates the quantity of goods 730 in the goods stack 700 (Step 441), and the quantity of goods 730 in the goods stack 700 may be calculated as a function of a total volume of the goods stack 700 and a volume of the goods 730. To be specific, the command information may include the volume of the goods AAA, or the command information may include the barcode information of the goods AAA. The processing unit 11 may retrieve the volume of the goods AAA from the first storage module 44 or the second storage module 16 according to the barcode information, and calculate a length L, a width W, and a height H of the goods stack 700 from the image alone or from the image in conjunction with the data collected by the first distance sensor 13, so as to calculate the volume of the goods stack 700 (where the volume is equal to L×W×H), and then divide the volume of the goods stack 700 by the volume of the goods AAA to obtain the quantity of the goods 730 in the goods stack 700.

In other embodiments, the quantity of the goods 730 in the goods stack 700 may also be calculated according to gaps between the goods 730 in the goods stack 700. In detail, the command information may include gap image information. FIG. 15 is referred to, which is an image 750 of one surface of the goods stack 700. The processing unit 11 compares the image 750 with the gap image information so as to define a gap image 752 in the image 750, and divide the image 750 into a plurality of blocks 751 based on the gap image 752, wherein each block 751 may be regarded as one piece of goods 730, whereby the quantity of the goods 730 on said surface of the goods stack 700 can be obtained by calculating the quantity of blocks 751. The self-guided transport equipment 10 may move to a further side of the goods stack 700 to capture an image of a further surface, thereby obtaining the quantity of the goods 730 on the further surface of the goods stack 700, so as to further calculate a total quantity of goods 730 in the goods stack 700.

In other embodiments, if the goods 730 include identification patterns, such as labels 720, the quantity of the goods 730 in the goods stack 700 may also be calculated based on the quantity of the identification patterns.

The foregoing methods for calculating the quantity of goods 730 in the goods stack 700 may be used separately, or two or three of these methods may be used in combination at the same time to improve the accuracy of calculation.

In the above embodiment, the target goods are "loaded pallet (specified goods)". In the case where the self-guided transport equipment 20 (i.e., the self-guided forklift) is used as the carrying equipment, the self-guided transport equipment 20 may extend with a prong 120a into the hole 771 of the pallet 770, thereby carrying all the goods 730 on the pallet 770 through one forking action, which, compared with picking up goods 730 by suction (such as the self-guided transport equipment 30), is advantageous for improving the carrying efficiency. In other embodiments, in the case where the automated carrying system takes the self-guided transport equipment 20 as the carrying equipment, and the command information does not limit the target goods to be placed on the pallet 770, if it is determined that the goods are the target goods, the automated carrying system may be further configured to perform the following steps: determining whether the goods stack 700 is placed on the pallet 770; if it is determined as "YES", proceed to the subsequent step, such as Step 450 in FIG. 4 or Step 441 in FIG. 11; and if it is determined as "NO", report a result of determination to the control center 40, and the control center 40 assigns other self-guided transport equipment (such as the self-guided transport equipment 30) to perform the subsequent step.

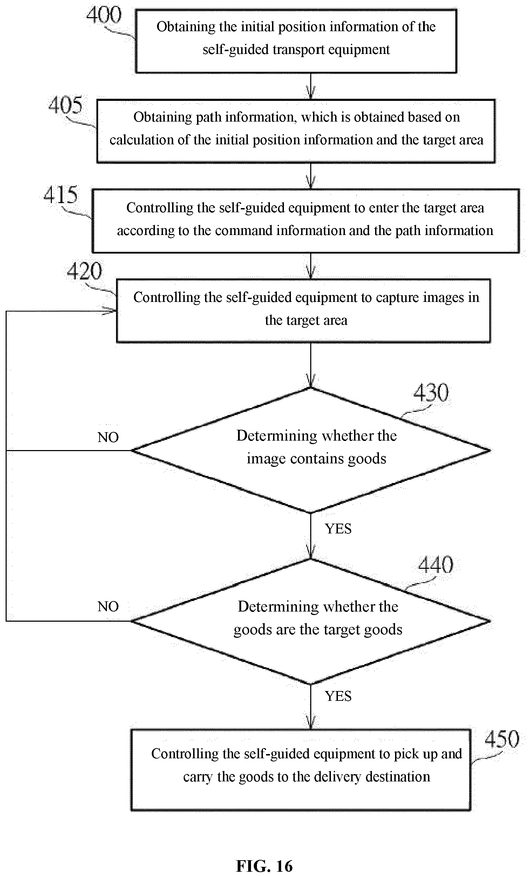

Please refer to FIG. 16. Compared with FIG. 4, FIG. 16 further includes Step 400 and Step 405, and Step 410 is replaced by Step 415.

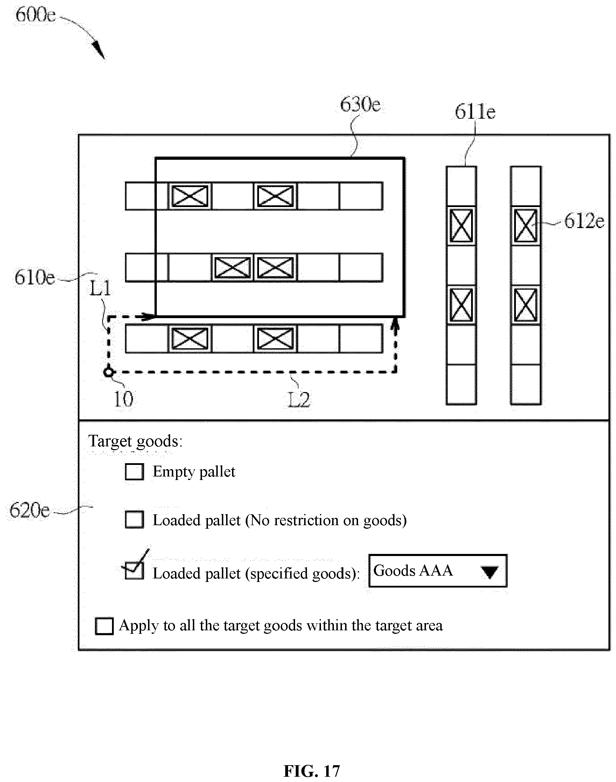

Step 400 is to obtain initial position information of the self-guided transport equipment 10. Step 405 is to obtain path information, which is obtained by calculating based on the initial position information and the target area. Step 415 is to control the self-guided transport equipment 10 to enter the target area according to the command information and the path information. For Step 420 to Step 450, please refer to the preceding texts. Now Step 400 to Step 415 will be described in detail with reference to FIG. 17.

In FIG. 17, a user interface 600e includes a map 610e and an input interface 620e, and the map 610e includes a shelf pattern 611e and a goods pattern 612e. First, the processing unit 11 may be used for positioning in order to obtain the initial position information of the self-guided transport equipment 10. For example, shelves in the warehouse may be each provided with a barcode pattern corresponding to its address information. The processing unit 11 obtains an image containing a barcode pattern of the shelf by means of the imaging module 12, retrieves data related to the barcode pattern from the first storage module 44 or the second storage module 16 to obtain the address information of the shelf, and then calculates a distance between the self-guided transport equipment 10 and the shelf, thereby obtaining the initial position information of the self-guided transport equipment 10 by calculation. The processing unit 11 may transmit the initial position information of the self-guided transport equipment 10 to the management unit 41 and display the position of the self-guided transport equipment 10 on the map 610e. The user may set a target area 630e, target goods, and a delivery destination via the user interface 600e. The management unit 41 may plan different paths, such as a first path L1 and a second path L2 in FIG. 17, for the self-guided transport equipment 10 according to the initial position information and the target area 630e, and then transmit the path information of the first path L1 and the path information of the second path L2 (which may be regarded as navigation information) to the processing unit 11. The processing unit 11 may select a shortest path (in this case, the first path L1) for entering the target area 630e according to the path information. In other embodiments, the path information may also be calculated by the processing unit 11. First, the processing unit 11 calculates to obtain the initial position information of the self-guided transport equipment 10, the control center 40 transmits the command information to the processing unit 11, and the processing unit 11 calculates the path information according to the initial position information and the target area 630e in the command information.

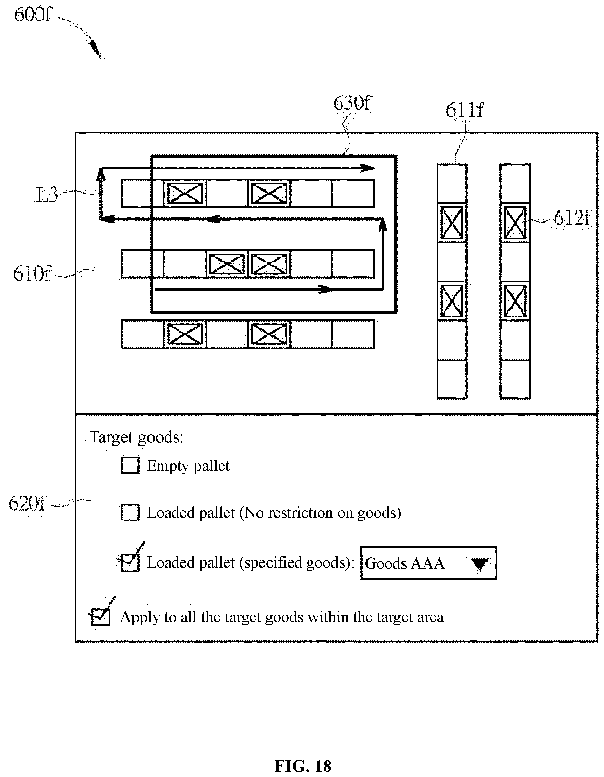

Referring to FIG. 18, a user interface 600f includes a map 610f and an input interface 620f, and the map 610f includes a shelf pattern 611f and a goods pattern 612f. The user may select an option "Apply to all the target goods within the target area" on the input interface 620f, and the processing unit 11 will control the self-guided transport equipment 10 to carry all the pallets loaded with goods AAA within the target area 630f to the delivery destination. In this way, the user only needs to provide command information once to apply it to all the target goods within the target area 630f, which is advantageous for improving the carrying efficiency and the operation convenience for users. To be specific, the processing unit 11 controls the self-guided transport equipment 10 to move according to a checking path L3, which is configured to go through all passages in the target area 630f, for example, by going from left to right and from down to up to pass through all the passages in the target area 630f in sequence, in order to ensure that all the target goods within the target area 630f are carried to the delivery destination.

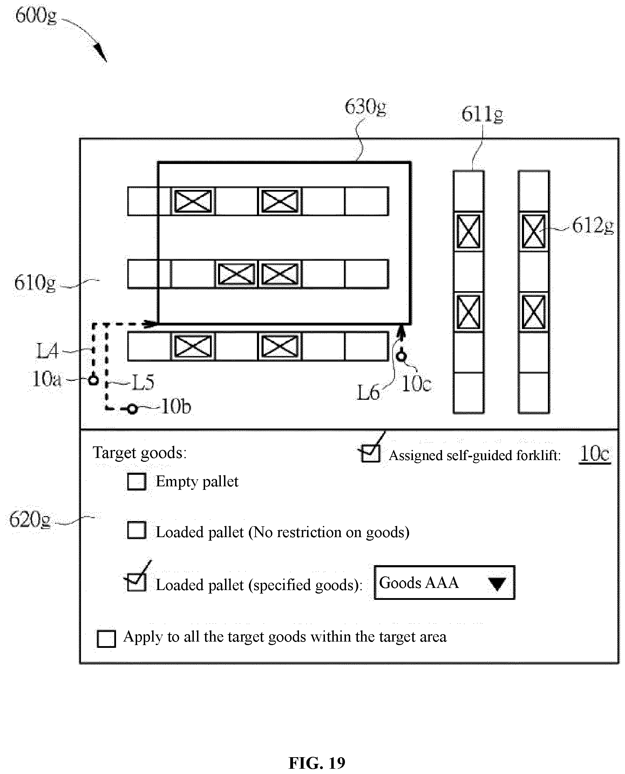

Referring to FIG. 19, a user interface 600g includes a map 610g and an input interface 620g, and the map 610g includes a shelf pattern 611g and a goods pattern 612g. There are self-guided transport equipments 10a, 10b and 10c in the warehouse. The management unit 41 may calculate, based on the initial position information of the self-guided transport equipment 10a, 10b and 10c respectively and the target area 630g, a shortest distance L4 between the self-guided transport equipment 10a and the target area 630g, a shortest distance L5 between the self-guided transport equipment 10b and the target area 630g, and a shortest distance L6 between the self-guided transport equipment 10c and the target area 630g. According to the shortest distances L4, L5 and L6, the user may assign, via the user interface 600g, some or all of the self-guided transport equipments 10a, 10b and 10c to enter the target area 630g to perform carrying tasks. According to an embodiment of the disclosure, the self-guided transport equipment with the shortest distance L4, L5, or L6 being within a predetermined distance range may be selected for receiving the command information to carry out the carrying task. For example, the user may set the predetermined distance range as less than or equal to 6m, and if the shortest distance L4 is 5m, the shortest distance L5 is 7m, and the shortest distance is 2m, then the management unit 41 will assign the self-guided transport equipments 10a and 10c to perform the carrying task. According to another embodiment of the disclosure, the self-guided transport equipment with the shortest distance to the target area 630g may be selected for receiving the command information to perform the carrying task. Take FIG. 19 as an example. As the shortest distance L6 is less than the shortest distance L4 and the shortest distance L5, and as a result, the management unit 41 will assign the self-guided transport equipment 10c to perform the carrying task. In other words, in the case where there are a plurality of self-guided transport equipments 10a, 10b and 10c in the workplace, a particular self-guided transport equipment may be assigned by the control center 40 to receive the command information. However, the present disclosure is not limited thereto. It is also possible for the control center 40 to randomly assign the self-guided transport equipments 10a, 10b and 10c to perform the carrying task.

In the above embodiment, if the subject involved in determination or calculation in the steps is the processing unit 11 (such as in Step 430 and Step 440), this is only for the purpose of giving examples. In practical application, the processing unit 11 may transmit images to the control center 40, and the determination is carried out by the control center 40.

Compared with the prior art, the target area of the present disclosure is an area instead of a fixed point, which can avoid the failure of carrying tasks due to deviation of the target goods from the right position, and which is advantageous for the user to apply a single command to all the target goods within the target area, without the need to give commands one by one to the target goods placed in different positions within the target area. The delivery destination of the disclosure may also be an area instead of a fixed point, thereby avoiding situations where goods cannot be unloaded if the fixed point has been occupied by other goods, or a number of self-guided transport equipments have to wait in line for unloading. Hence, the automated carrying system of the disclosure is advantageous for improving the success rate of carrying tasks, the carrying efficiency, and also the convenience of use for users.

The above descriptions are only the preferred embodiments of this disclosure, which do not intend to limit the disclosure. For the skilled in the art, the disclosure may have various modifications and changes. Any modification, equivalent substitution, improvement, etc. within the spirit and principles of this disclosure should be included in the scope of protection of the disclosure.

## Claims

1. An automated carrying system, **characterized in that** it comprises:
a control center, which is used for providing command information, the command information including a target area, target goods, and a delivery destination; and
a self-guided transport equipment, which is electrically connected to the control center;
wherein the automated carrying system is configured to perform the following steps:
controlling the self-guided transport equipment to enter the target area according to the command information;
controlling the self-guided transport equipment to capture images in the target area;
determining whether the image contains goods;
if the image contains the goods, determining whether the goods are the target goods; and
if the goods are the target goods, controlling the self-guided transport equipment to pick up and carry the goods to the delivery destination.

2. The automated carrying system according to claim 1, **characterized in that**, the self-guided transport equipment comprises:
a drive module for driving the self-guided transport equipment to move;
a goods holder module for picking up the goods;
an imaging module for capturing the images; and
a processing unit, which is electrically connected to the control center, the drive module, the goods holder module and the imaging module.

3. The automated carrying system according to claim 1, **characterized in that**, if the image contains the goods, the automated carrying system is further configured to perform the following step:
determining whether the goods are within the target area.

4. The automated carrying system according to claim 1, **characterized in that**, the command information further includes a required quantity of the target goods, and if the image contains a goods stack formed by a plurality of the goods stacked together and the goods are the target goods, the automated carrying system is further configured to perform the following steps:
calculating a quantity of the goods in the goods stack; and
determining whether the quantity of the goods in the goods stack is greater than or equal to the required quantity of the target goods;
if the quantity of the goods in the goods stack is greater than or equal to the required quantity of the target goods, controlling the self-guided transport equipment to pick up and carry the goods from the goods stack to the delivery destination.

5. The automated carrying system according to claim 4, **characterized in that**, if the quantity of the goods in the goods stack is less than the required quantity of the target goods, the automated carrying system is further configured to perform the following steps:
determining whether the self-guided transport equipment has already moved around the target area for a full circle;
if the self-guided transport equipment has already moved around the target area for a full circle, controlling the self-guided transport equipment to pick up and carry the goods from the goods stack to the delivery destination.

6. The automated carrying system according to claim 5, **characterized in that**, if the self-guided transport equipment has not yet to move around the target area for a full circle, controlling the self-guided transport equipment not to pick up the goods from the goods stack.

7. The automated carrying system according to claim 5, **characterized in that**, the automated carrying system is further configured to perform the following steps:
controlling the self-guided transport equipment to move to a further goods stack within the target area, wherein the further goods stack is formed by a plurality of the goods stacked together, and the goods are the target goods;
controlling the self-guided transport equipment to pick up and carry the goods from the further goods stack to the delivery destination;
calculating the quantities of the goods picked up by the self-guided transport equipment in order to obtain a sum of the quantities of the picked goods;
determining whether the sum of the quantities of the picked goods is greater than or equal to the required quantity of the target goods;
if the sum of the quantities of the picked goods is greater than or equal to the required quantity of the target goods, controlling the self-guided transport equipment to implement an end command.

8. The automated carrying system according to claim 4, **characterized in that**, calculation of the quantity of the goods in the goods stack is achieved based on calculation of a total volume of the goods stack and a volume of the goods.

9. The automated carrying system according to claim 4, **characterized in that**, calculation of the quantity of the goods in the goods stack is achieved based on calculation of gaps between the goods in the goods stack.

10. The automated carrying system according to claim 4, **characterized in that**, the goods comprise identification patterns, and calculation of the quantity of the goods in the goods stack is achieved based on calculation of a quantity of the identification patterns.

11. The automated carrying system according to claim 4, **characterized in that**, the self-guided transport equipment is a self-guided forklift, and the automated carrying system is further configured to perform the following step:
determining whether the goods stack is placed on a pallet.

12. The automated carrying system according to claim 1, **characterized in that**, the automated carrying system is further configured to perform the following steps:
obtaining initial position information of the self-guided transport equipment; and
obtaining path information, which is obtained based on calculation of the initial position information and the target area;
wherein controlling the self-guided transport equipment to enter the target area according to the command information further includes controlling the self-guided transport equipment to enter the target area according to the path information.

13. The automated carrying system according to claim 1, **characterized in that**, the control center comprises a user interface, the user interface including a map, on which the user selects the target area.

14. The automated carrying system according to claim 1, **characterized in that**, the automated carrying system is further configured to perform the following step:
assigning, via the control center, the self-guided transport equipment to receive the command information.

15. The automated carrying system according to claim 14, **characterized in that**, assigning the self-guided transport equipment to receive the command information according to a shortest distance between the self-guided transport equipment and the target area.

16. The automated carrying system according to claim 1, **characterized in that**, the command information is applicable to all the target goods within the target area.
